# EUROPÄISCHE PATENTSCHRIFT

(11) **EP 4 048 981 B1**
(45) Veröffentlichungstag und Bekanntmachung des Hinweises auf die Patenterteilung: **06.09.2023**
(21) Anmeldenummer: 20780654.8
(22) Anmeldetag: 24.09.2020
(51) Int. Cl.: G01F 1/56, G01F 1/66, G01F 15/00

(54) **VERFAHREN ZUR HERSTELLUNG EINES MESSROHRS FÜR EIN DURCHFLUSS-MESSGERÄT**
PROCESS OF MANUFACTURING A MEASURING CONDUIT FOR A FLOW METER
PROCÉDÉ DE FABRICATION D'UN CONDUIT DE MESURE POUR UN DÉBITMÈTRE

(30) Priorität: 22.10.2019 DE 102019128542
(43) Veröffentlichungstag der Anmeldung: 31.08.2022
(73) Patentinhaber: Endress + Hauser Flowtec AG, 4153 Reinach (CH)
(72) Erfinder: SULZER, Thomas, 4058 Basel (CH); TSCHAMBSER, Florent, 68220 Hesingue (FR); DREHER, Lars, 79282 Ballrechten-Dottingen (DE)
(74) Vertreter: Hahn, Christian
(86) Internationale Anmeldenummer: PCT/EP2020/076672
(87) Internationale Veröffentlichungsnummer: WO 2021/078462

(56) Entgegenhaltungen:
- EP-A1- 1 522 827
- EP-A2- 0 682 233
- DE-A1-102017 130 983
- US-A1- 2013 305 838

## Beschreibung

Die Erfindung betrifft ein Verfahren zur Herstellung eines Meßrohrs für ein Durchfluß-Meßgerät.

In der industriellen Meß- und Automatisierungstechnik werden zum Ermitteln von Meßwerten für Strömungs- und/oder Stoffparameter von Fluiden, nicht zuletzt auch Trinkwasser, oftmals Durchfluß-Meßgeräte verwendet, die zumindest ein Meßrohr aufweisen, das in den Verlauf einer das jeweilige Fluide (Meßstoff) führenden Prozeßleitung eingesetzt sind und bei denen das Meßrohr ein im wesentlichen hohlzylindrisches Träger-Rohr mit einer Wandung aus einem Metall, beispielsweise Edelstahl, und mit einem davon umschlossenen im wesentliches kreiszylindrischen bzw. kreisförmige, ggf. auch unterschiedlich große Querschnitte aufweisenden Lumen, einen das Träger-Rohr innen auskleidenden, mithin dieses im Betrieb gegen den zu messenden Meßstoff isolierenden Liner aus einem Kunststoff sowie wenigstens ein am Träger-Rohr angebrachtes Sensorelement zum Erfassen wenigstens einer chemischen und/oder physikalischen Meßgröße des im Meßrohr geführten Fluids aufweist. Beispiele für derartige, insb. magnetisch-induktiv, akustisch oder vibronisch messenden, Durchfluß-Meßgeräte sind u.a. aus der DE-A 10 2006 051 015, der DE-A 10 2014 114 289, der DE-A 10 2016 118 213, der DE-A 10 2017 130 983, der EP-A 1 519 160, der EP-A 2 682 719, der US-A 2006/0162465, der US-A 2007/0295102, der US-A 2010/0294043, der WO-A 2006/019923 oder der WO-A 2016/045881 bekannt. Das wenigstens eine Sensorelement ist dafür eingerichtet, wenigstens ein physikalische und/oder wenigstens ein chemische Meßgröße eines im Lumen des Liner-Rohrs geführten Fluids zu erfassen und in ein, insb. elektrisches, Sensorsignal zu wandeln, nämlich im Betrieb ein Sensorsignal bereitzustellen, das einer Änderung der zu erfassenden Meßgröße mit einer Änderung wenigstens eines Signalparameter, beispielsweise einer Signalamplitude, einer Signalfrequenz oder einer Signalphasenwinkel, folgt. Das Sensorelement kann, je nach Meßprinzip des jeweiligen Durchfluß-Meßgeräts, demnach beispielsweise eine Elektrode zum Abgreifen eines elektrischen Potentials des Fluids oder beispielsweise ein Ultraschall sendender und/oder empfangender piezoelektrischer Wandler oder ein elektrodynamischer Schwingungssensor (Schwingspule) sein.

Wie u.a. in der DE-A 10 2016 118 213, DE-A 10 2014 114 289, EP-A2 682 719,
WO-A 2016/045881 gezeigt, kann ein solches Meßrohr dadurch hergestellt werden, indem zunächst in das separat vorgefertigte Träger-Rohr ein ebenfalls separat vorgefertigtes Liner-Rohr, nämlich ein röhrenförmiger, ggf. auch schlauchartiger Rohling mit einer Wandung aus einem thermoplastischen Kunststoff, beispielsweise einem Polyethylen (PE), im Lumen des Träger-Rohrs positioniert wird, beispielsweise nämlich in das Träger-Rohr eingelegt oder eingezogen wird und das Liner-Rohr hernach durch entsprechendes Umformen von dessen Wandung in-situ in die endgültige (Rohr-)form verbracht und daselbst unter Bildung eines entsprechenden Form- und/oder Kraftschlusses mit dem Träger-Rohr zugleich dauerhaft fixiert wird. Das vorbezeichnete Umformen der Wandung des Liner-Rohrs kann beispielweise durch Extrudieren (Hohlkörperblasen) oder Aufweiten mittels Dorn erfolgen. Schlußendlich wird das wenigstens eine Sensorelements am Träger-Rohr angebracht, beispielsweise nämlich außen auf dessen Wandung aufmontiert und/oder in die Wandung eingesetzt, ggf. auch derart, daß es den Liner lokal durchdringt, mithin im Betrieb den jeweiligen Meßstoff kontaktiert.

In der US 2013/305838 A1 ist ein Verfahren zur Herstellung eines Messrohrs mit einem Liner offenbart, bei dem ein Liner-Rohr in ein Lumen eines Träger-Rohrs eingeführt wird, erwärmt wird und im erwärmten Zustand außen am Träger-Rohr fixiert wird.

Wenngleich derartige Liner eine hohe chemische, thermische und mechanische Beständigkeit aufweisen können, beispielsweise auch derart, daß sie auch für die Verwendung in Trinkwasser geeignet sind, ist ein Nachteil darin zusehen, daß die vorbeschriebene Fertigung eines solchen Liners tatsächlich mit einem sehr hohen technischen Aufwand verbunden ist; dies im besonderen auch für den Fall, daß der Liner mittels eines vorgefertigten Liner-Rohrs hergestellt wird. Ausgehend vom vorbezeichneten Stand der Technik besteht eine Aufgabe der Erfindung darin, die Herstellung von Meßrohren der in Rede dahingehend zu verbessern, daß eine einfache und kostengünstige Fertigung des Liners ermöglicht ist.

Zur Lösung der Aufgabe besteht die Erfindung in einem Verfahren zur Herstellung eines Meßrohrs für ein Durchfluß-Meßgerät, insb. für ein magnetisch-induktives Durchfluß-Meßgerät oder ein Ultraschall-Durchflußmeßgerät oder ein vibronisches Durchfluß-Meßgerät, wobei das Meßrohr ein, z.B. zumindest abschnittsweise hohlzylindrisches, Träger-Rohr mit einer Wandung aus einem, beispielsweise nicht-ferromagnetischen, Metall und mit einem davon umschlossenen, beispielsweise zumindest abschnittsweise kreiszylindrischen bzw. kreisförmige Querschnitte aufweisenden, Lumen, einen das Träger-Rohr innen auskleidenden Liner sowie wenigstens ein am Träger-Rohr angebrachtes Sensorelement zum Erfassen wenigstens einer Meßgröße eines im Meßrohr geführten Fluids aufweist, welches Verfahren
- ein Bereitstellen des Träger-Rohrs;
- ein Bilden des Liners im Lumen des Träger-Rohrs;
- sowie ein Anbringen des wenigstens einen Sensorelements am Träger-Rohr umfaßt.

Beim erfindungsgemäßen Verfahren umfaßt zudem das Bilden des Liner im besonderen:
▪ ein Breitstellen eines Liner-Rohrs mit einer Wandung aus einem thermoplastischen Kunststoff, beispielsweise einem Polyethylen (PE) oder einem Polyvinylchlorid (PVC), und einem davon umschlossenen Lumen, wobei das Liner-Rohr einen Außendurchmesser, der kleiner als ein Innendurchmesser (Kaliber) des Träger-Rohrs ist, aufweist und wobei die Wandung des Liner-Rohrs in einem ersten Teilbereich wenigstens eine, beispielsweise sich entlang einer gedachten Längsachse erstreckende, Falte aufweist, derart, daß sowohl das Lumen als auch eine Mantelfläche des Liner-Rohrs jeweils eine von einem Kreiszylinder abweichende, beispielsweise rinnenförmige, Form bzw. nicht kreisförmige, beispielsweise c-förmige oder u-förmige, Querschnitte aufweist und daß die Mantelfläche des Liner-Rohrs im ersten Teilbereich konkav gekrümmt ist;
▪ ein Positionieren des Liner-Rohrs im Lumen des Träger-Rohrs;
▪ ein Erwärmen des Liner-Rohrs, beispielsweise mittels in das Lumen des Liner-Rohrs eingeleitetem Dampf, zum Versetzen des Kunststoffs der Wandung des Liner-Rohrs in einen visko-elastischen Zustand;
▪ ein Verformen der Wandung des Liner-Rohres, derart, daß die Wandung des Liner-Rohres entfaltet und an die Wandung des Träger-Rohrs gedrückt wird und daß die Mantelfläche des Liner-Rohrs im ersten Teilbereich konvex gekrümmt ist;
▪ sowie ein Abkühlen bzw. Abkühlenlassen des Liner-Rohrs zum Versetzen des Kunststoffs der Wandung des Liner-Rohrs in einen elastischen Zustand, derart, daß ein das Liner-Rohr dauerhaft im Träger-Rohr fixierender Form- und/oder Kraftschluß zwischen Liner-Rohr und Träger-Rohr gebildet wird.

Nach einer ersten Ausgestaltung ist der erste Teilbereich des Liner-Rohrs eingerichtet, sich selbsttätig bzw. unter Einwirkung eines Umformdrucks im Lumen umzuformen, wenn der die Wandung des Liner-Rohrs bildende thermoplastische Kunststoff in den visko-elastischen Zustand versetzt ist, insb. nämlich aufgrund eines Memory-Effekts bei thermoplastischen Kunststoffen. Diese Ausgestaltung der Erfindung weiterbildend umfaßt das Verformen der Wandung des Liner-Rohres ein selbsttätiges Umformen des ersten Teilbereichs des Liner-Rohrs umfaßt, insb. nämlich aufgrund des Memory-Effekts bei thermoplastischen Kunststoffen.

Nach einer zweiten Ausgestaltung der Erfindung umfaßt das Verfahren weiters:
- ein Versetzen des Kunststoffs der Wandung eines zunächst hohlzylindrischen Teilsegments des Liner-Rohrs in einen visko-elastischen Zustand;
- ein Falten des ersten Teilbereichs der Wandung des Teilsegments des Liner-Rohres, derart, daß die Mantelfläche zumindest des Teilsegments des Liner-Rohrs im ersten Teilbereich hernach konkav gekrümmt ist und daß sowohl das Lumen als auch die Mantelfläche zumindest des Teilsegments des Liner-Rohrs jeweils eine von einem Kreiszylinder abweichende, beispielsweise rinnenförmige, Form bzw. nicht kreisförmige, beispielsweise c-förmige oder u-förmige, Querschnitte aufweist;
- sowie Abkühlen bzw. Abkühlenlassen des Teilsegments des Liner-Rohrs zum Versetzen des Kunststoffs der Wandung zumindest des Teilsegments des Liner-Rohrs in einen elastischen Zustand, derart, daß die wenigstens eine Falte im ersten Teilbereich zumindest des Teilsegments gebildet ist.

Diese Ausgestaltung der Erfindung weiterbildend ist ferner vorgesehen, daß das Versetzen des Kunststoffs der Wandung des Teilsegments in den visko-elastischen Zustand ein Erwärmen des Teilsegments umfaßt und/oder daß das Versetzen des Kunststoffs der Wandung des Teilsegments in den visko-elastischen Zustand ein Abkühlen bzw. Abkühlenlassen des Teilsegments umfaßt.

Nach einer dritten Ausgestaltung der Erfindung umfaßt der Schritt des Bildens des Liners einen Schritt des Auftragens eines Klebstoffs auf eine Innenfläche der Wandung des Träger-Rohrs und/oder auf die Mantefläche des Liner-Rohrs umfaßt.

Nach einer vierten Ausgestaltung der Erfindung umfaßt das Verfahren weiters: ein Aufweiten wenigstens eines aus dem Träger-Rohr herausragenden Endes, beispielsweise nämlich von aus dem Träger-Rohr herausragenden Enden, des im Träger-Rohrs fixierten Liner-Rohrs, beispielsweise zum Bilden einer Flanschdichtung.

Nach einer fünften Ausgestaltung der Erfindung ist ferner vorgesehen, daß das Liner-Rohr eine Länge, die größer als eine, beispielsweise mehr als 0,1 m und/oder weniger als 3 m betragende, Länge des Träger-Rohrs ist, aufweist. Diese Ausgestaltung der Erfindung weiterbildend ist ferner vorgesehen, daß das Bilden des Liners ein Kürzen des im Träger-Rohr fixierten Liner-Rohrs umfaßt.

Nach einer sechsten Ausgestaltung der Erfindung ist ferner vorgesehen, daß das Träger-Rohr eine in dessen Lumen positionierte und mit dessen Wandung verbundene und/oder darin eingeformte, beispielsweise gitterförmige, Stütz- und Haltevorrichtung für den Liner aufweist. Diese Ausgestaltung der Erfindung weiterbildend ist ferner vorgesehen, daß zum Bilden des Liners die Wandung des Liner-Rohres so verformt wird, daß sie zumindest teilweise gegen die Stütz- und Haltevorrichtung gedrückt wird.

Nach einer siebenten Ausgestaltung der Erfindung ist ferner vorgesehen, daß sich das Liner-Rohr während des Positionierens in das Träger-Rohr in einem elastischen Zustand befindet.

Nach einer achten Ausgestaltung der Erfindung ist ferner vorgesehen, daß an einem ersten Rohrende des Träger-Rohrs ein erster Anschlußflansch und an einem zweiten Rohrende des Träger-Rohrs ein zweiter Anschlußflansch vorgesehen sind, beispielsweise nämlich am jeweiligen Rohrende angeschweißt oder zusammen mit dem Träger-Rohr als integrale Bestandteile eines monolithischen Formteils ausgebildet sind.

Nach einer neunten Ausgestaltung der Erfindung ist ferner vorgesehen, daß der thermoplastische Kunststoff der Wandung des Liner-Rohrs ein Polyethylen, beispielsweise ein Hart-Polyethylen bzw. ein PE 80, ein PE 100 oder ein PE 100 RC, ist.

Nach einer zehnten Ausgestaltung der Erfindung ist ferner vorgesehen, daß das wenigsten eine Sensorelement mittels wenigstens einer, beispielsweise zumindest anteilig auch im Liner positionierte, Elektrode gebildet ist.

Ein Grundgedanke der Erfindung besteht darin, die bislang technisch sehr aufwendige Herstellung von Linern in Durchfluß-Meßgeräten, nicht zuletzt von für Trinkwasser geeigneten Linern und/oder auf Basis eines vorgefertigten Liner-Rohrs fertiggestellten Liner, dadurch signifikant zu vereinfachen, daß der Liner nach einem eigentlich für die Sanierung von erdvergrabenen (Trink-)Wasserleitungen entwickelten Verfahren, dem sogenannten Close-fit-Verfahren, hergestellt wird. Ein Vorteil der Erfindung besteht u.a. auch darin, daß für die Herstellung des Liners auch die speziell für die Anwendung in Trinkwasser entwickelten und entsprechend auch verfüglichen Liner-Systeme, beispielsweise "Wavin Compact Pipe^{®}" der Fa. Wavin GmbH, als Liner-Rohr verwendet werden können.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1a, 1b: schematisch ein Meßrohr für ein Durchfluß-Meßgerät in verschiedenen Ansichten;
- Fig. 2a - e: schematisiert Verfahrensschritte eines erfindungsgemäßen Verfahrens zur Herstellung eines Meßrohrs gemäß Fig. 1a bzw. 1b; und
- Fig. 3a - c: schematisiert Verfahrensschritte zur Herstellung eines bei einem Verfahren gemäß Fig. 2a - e verwendeten Liner-Rohrs.

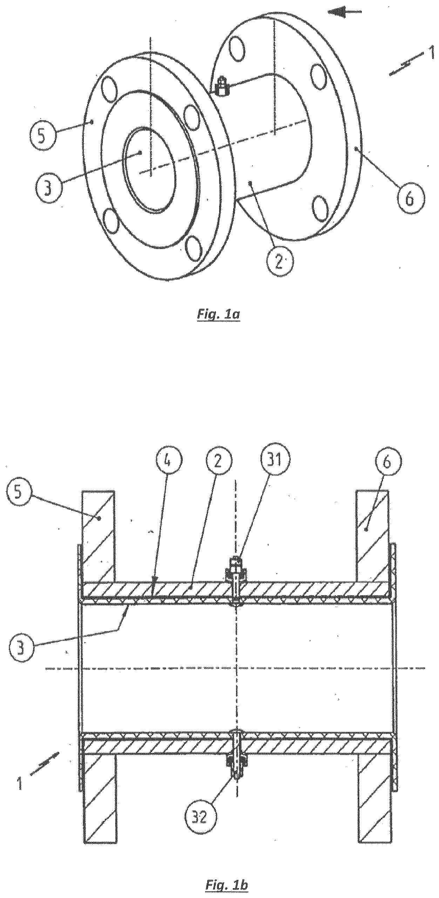

In den Fig. 1a und 1b ist in verschiedenen Ansichten ein Meßrohr 1 eines Durchfluß-Meßgeräts, beispielsweise für ein magnetisch-induktives Durchfluß-Meßgerät oder ein Ultraschall-Durchflußmeßgerät oder ein vibronisches Durchfluß-Meßgerät, schematisch dargestellt. Das Durchfluß-Meßgerät kann insbesondere dazu dienen, eine oder mehrere physikalische und/oder chemische Meßgrößen, beispielsweise nämlich einen oder mehrere Strömungs- und/oder Stoffparameter, eines in einer - hier nicht dargestellten - Rohrleitung geführten Meßstoffs, beispielsweise eines strömenden Fluids, zu messen. Bei dem Durchfluß-Meßgerät kann es sich demnach beispielsweise um ein eine Strömungsgeschwindigkeit und/oder einen Volumenstrom magnetisch-induktiv messendes oder auf Basis von Ultraschall akustisch messendes Durchfluß-Meßgerät oder um ein vibronisches Durchfluß-Meßgerät, beispielsweise nämlich ein Coriolis-Massenstrom-Meßgerät, handeln. Die vorbezeichnete Rohrleitung kann beispielsweise Bestandteil eines Trinkwasser-Verteilnetzes bzw. der Meßstoff kann beispielsweise Trinkwasser, insb. nämlich zur derzeit gültigen deutschen Trinkwasserverordnung (TrinkW 2001 + Novellierung 2011) konformes Trinkwasser, sein.

Das Meßrohr 1 weist ein Träger-Rohr 2 mit einer Wandung aus einem, beispielsweise nicht-ferromagnetischen, Metall und mit einem davon umschlossenen Lumen sowie wenigstens ein an nämlichem Träger-Rohr 2 angebrachtes Sensorelement 31 (31, 32) zum Erfassen der wenigstens einer Meßgröße des vorbezeichneten Meßstoffs auf.

Das wenigstens eine Sensorelement 31 ist insbesondere dafür eingerichtet, die wenigstens ein wenigstens eine Meßgröße zu erfassen und in ein, insb. elektrisches, Meßsignal zu wandeln, beispielsweise nämlich in Form eines von der wenigstens einen Meßgröße anhängigen elektrischen Potentials bzw. einer von der wenigstens einen Meßgröße anhängigen elektrischen Meßspannung. Dementsprechend ist das wenigsten eine Sensorelement 31 gemäß einer weiteren Ausgestaltung der Erfindung mittels wenigstens einer, beispielsweise zumindest anteilig auch im Liner 3 positionierten, Elektrode gebildet. Das Sensorelement 31 kann aber beispielsweise auch ein Ultraschall sendender und/oder empfangender piezoelektrischer Wandler oder ein elektrodynamischer Schwingungssensor (Schwingspule) sein. Das wenigstens eine Sensorelement 31 kann desweiteren mit einer - hier nicht dargestellten - Meß- und Betriebselektronik des jeweiligen Durchfluß-Meßgeräts elektrische verbunden sein, die dafür eingerichtet ist, das wenigstens eine Meßsignal zu empfangen und auszuwerten, beispielsweise nämlich unter Verwendung des Meßsignals die wenigstens eine Meßgröße quantifizierende Meßwerte zu ermitteln.

Nach einer weiteren Ausgestaltung der Erfindung ist das Meßrohr 1 für die Verwendung in einem magnetisch-induktiven Durchfluß-Meßgerät vorgesehen. Dementsprechend kann das Meßrohr 1 ferner eine außen am Träger-Rohr 2 angeordnete Magnetkreisanordnung umfassen, die dafür eingerichtet ist, ein magnetischen Feldes zu erzeugen, das den innerhalb des Meßrohrs 1 strömenden Meßstoff - hier nämlich einer elektrisch leitfähigen Flüssigkeit - zumindest abschnittsweise senkrecht zu dessen Strömungsrichtung durchsetzt und somit im strömenden Meßstoff eine elektrische Spannung induziert. Die Magnetkreisanordnung kann beispielsweise mittels zwei oder mehr Feldspulen gebildet sein, die im Meßbetrieb mit der vorbezeichneten Meß- und Betriebselektronik elektrisch verbunden sind, wobei die Meß- und Betriebselektronik dafür eingerichtet ist, das magnetische Feld bewirkende veränderliche elektrische Ströme von vorgebbarer Stromstärke und -richtung durch die Feldspulen zu treiben. Zum Abgreifen der im strömenden Meßstoff entsprechend induzierten elektrischen Spannung ist das Sensorelement 31 eine erste Elektrode und weist das Meßrohr 1 zudem eine als zweites Sensorelement 32 dienliche zweite Elektrode auf. Die vorbezeichneten als Sensorelemente dienlcihen Elektroden können, wie auch aus Fig. 1b ersichtlich, beispielsweise einander diametral gegenüberliegend angeordnet sein, derart, daß ein die Elektroden imaginär verbindender Durchmesser des Meßrohrs 1 zu einem zwei der vorbezeichneten Feldspulen imaginär verbindenden Durchmesser des Meßrohrs 1 senkrecht verläuft. Alternativ können die Elektroden beispielsweise auch für den Fall, daß mehr als zwei Elektroden im Meßrohr 1 vorgesehen sind, etwa zum Abgreifen von Referenzpotentialen und/oder zum Überwachen eines Mindestfüllstandes bei waagerecht eingebautem Meßrohr 1, so am Träger-Rohr 2 angeordnet sein, daß sie sich nicht diametral gegenüberliegen.

Nach einer weiteren Ausgestaltung der Erfindung ist das Träger-Rohr 2 so ausgebildet, daß dessen Lumen zumindest abschnittsweise kreiszylindrisch ist bzw. dessen Lumen kreisförmige Querschnitte aufweist. Das Träger-Rohr 2 kann dafür beispielsweise zumindest abschnittsweise hohlzylindrisch ausgebildet sein. Die Wandung des Träger-Rohrs 2 kann beispielsweise aus einem nicht-ferromagnetischen Metall, wie z.B. Edelstahl, bestehen. Zum Eingliedern des Meßrohrs 1 in die vorbezeichnete Rohrleitung können, wie auch in Fig. 1a und 1b dargestellt, ferner an einem ersten Rohrende des Träger-Rohrs 2 ein erster Anschlußflansch 5 und an einem zweiten Rohrende des Träger-Rohrs 2 ein zweiter Anschlußflansch 6 vorgesehen, beispielsweise nämlich am jeweiligen Rohrende angeschweißt oder zusammen mit dem Träger-Rohr 2 als integrale Bestandteile eines monolithischen Formteils ausgebildet sein. Alternativ oder in Ergänzung kann die Wandung des Träger-Rohrs 2 für das Einsetzen des Sensorelements bzw. der Sensorelemente, ggf. auch für das Einsetzen der vorbezeichneten Feldspulen dienliche seitliche Öffnungen aufweisen.

Zur elektrischen und/oder chemischen Isolierung der Wandung des Träger-Rohrs 2 gegen den im Betrieb im Meßrohr geführten Meßstoff weist das Meßrohr ferner einen das Träger-Rohr 2 innen auskleidenden Liner 3, nämlich eine im Lumen des Träger-Rohrs angeordnete und vollumfänglich an dessen Wandung anliegende Röhre aus einem Isoliermaterial auf.

Zum Herstellen des Meßrohrs 1 wird zunächst das Träger-Rohr 2, ggf. auch in Form eines bereits mit den vorbezeichneten Anschlußflanschen (5, 6) bestücktes und/oder später noch weiter zu bearbeitenden, beispielsweise nämlich noch zu lackierenden, Halbzeuges (Träger-Rohr-Rohling), bereitgestellt. Ferner wird im Lumen des Träger-Rohrs 2 der Liner 3 gebildet und hernach wird das wenigstens eine Sensorelement 31 (31, 32) am - innen durch den Liner 3 bereits ausgekleideten - Träger-Rohr 2 angebracht.

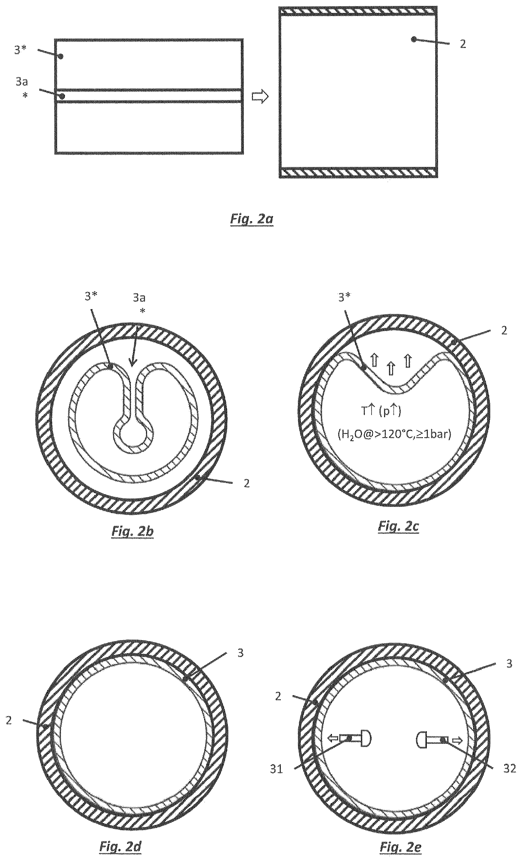

Zum Bilden des Liners 3 wird ein Liner-Rohr 3* mit einer Wandung aus einem thermoplastischen, beispielsweise auch teilkristallinen, Kunststoff verwendet, daß, wie in den Fig. 2a, 2b und 2c gezeigt bzw. aus einer Zusammenschau der Fig. 2a bis d ohne weiteres ersichtlich, im Lumen des Träger-Rohrs 2 entsprechend positioniert, beispielsweise nämlich in das Lumen eingeschoben bzw. eingelegt wird. Bei dem Liner-Rohr 3* handelt es sich um einen aus dem vorbezeichneten thermoplastischen Kunststoff separat vorgefertigten röhrenförmigen Rohling mit einer speziellen, von einem Hohlzylinder abweichenden Form. Nämlicher Kunststoff des Liner-Rohrs 3* ist nach einer weiteren Ausgestaltung der Erfindung ein Polyvinylchlorid (PVC) oder ein Polyethylen (PE), beispielsweise nämlich ein Hart-Polyethylen (PE-HD) bzw. ein Polyethylen mit der Werkstoffbezeichnung PE 80, PE 100 oder PE 100 RC. Ein solches Polyethylen weist einen etwa zwischen -50°C und +80°C liegenden nutzbaren Temperaturbereich auf und zeichnet sich u.a. durch eine Shore-Härte von etwa 64 Shore-D, eine zwischen 20-30 MPa liegende Zugfestigkeit, ein zwischen 700-1200 MPa liegendes E-Modul bei einer Reißdehnung zwischen 20-80% sowie eine etwa zwischen 6-15 kJ/m² Kerbschlagzähigkeit aus.

Erfindungsgemäß weist die Wandung des Liner-Rohrs 3*, wie auch in Fig. 2a und 2b schematisch dargestellt, in einem ersten Teilbereich 3a* wenigstens eine, insb. sich entlang einer gedachten Längsachse nämlichen Liner-Rohrs 3* erstreckende, Falte auf, derart, daß sowohl eine äußere, nämlich dem Lumen des Liner-Rohrs 3* abgewandte Mantelfläche des Liner-Rohrs 3* als auch dessen Lumen jeweils eine von einem Kreiszylinder abweichende Form aufweisen, beispielsweise rinnenförmig sind, bzw. daß Mantelfläche und Lumen jeweils nicht kreisförmige, beispielsweise nämlich c-förmige oder u-förmige, Querschnitte aufweisen, wobei die Mantelfläche des Liner-Rohrs 3* im vorbezeichneten ersten Teilbereich konkav gekrümmt ist. Als Liner-Rohr 3* kann dementsprechend beispielsweise auch ein von der Firma Wavin GmbH (http://www.wavin.com/) unter der Warenbezeichnung "Wavin Compact Pipe^{®} PE 100" bzw. "Wavin Compact Pipe^{®} PE 100 RC" für - hier einem Kaliber D₂ (Innendurchmesser) des Trägerrohrs 2 entsprechende - Nennweiten zwischen 100 mm - 500 mm angebotenes PE-Rohr verwendet werden.

Das Liner-Rohr 3* weist zudem einen Außendurchmesser auf, der, wie auch aus den Fig. 2a und 2b ohne weiteres ersichtlich, kleiner als ein Innendurchmesser (Kaliber) des Träger-Rohrs 2 ist, wodurch das Positionieren des Liner-Rohrs 3 im Träger-Rohr 2 im Vergleich zu konventionellen Herstellungsverfahren deutlich vereinfacht ist. Der erste Teilbereich 3a* des Liner-Rohrs 3* ist zudem ausgestaltet, sich, wie auch in Fig. 2c angedeutet, selbsttätig bzw. unter Einwirkung eines Umformdrucks p, nämlich eines im Vergleich zum Umgebungsdruck (Atmosphärendruck) geringfügig erhöhten statischen (Innen-)Drucks (p > 1 bar) im Lumen umzuformen, wenn der die Wandung des Liner-Rohrs 3* bildende thermoplastische Kunststoff durch Zufuhr von Wärme (TT) in einen visko-elastischen Zustand versetzt, nämlich auf eine oberhalb von dessen Erweichungstemperatur, gleichwohl unterhalb von dessen Fließtemperatur (Schmelzpunkt) liegende Umformtemperatur verbracht wird; dies im besonderen in der Weise, daß die Wandung des Liner-Rohr aufgrund einer Überführung von zunächst in gestreckter Lage befindlichen Molekülketten im ersten Teilbereich in deren ursprünglich geknäulte Lage (Memory-Effekt bei thermoplastischen Kunststoffen) eine ursprüngliche, beispielsweise nämlich hohlzylindrische Form wieder annimmt. Dementsprechend wird zum Bilden des Liners das im Lumen des Träger-Rohrs 2 positionierte Liner-Rohr 3*, beispielsweise mittels in das Lumen des Liner-Rohrs eingeleitetem Dampf, insb. mit einer Dampf-Temperatur von über 120°C und/oder mit einem Druck von ≥1 bar, entsprechend erwärmt, um den Kunststoff der Wandung des Liner-Rohrs in den vorbezeichneten visko-elastischen Zustand zu versetzten und daraufhin die Wandung des Liner-Rohres zu verformen bzw. sich zurückformen zu lassen, derart, daß die Wandung des Liner-Rohres entfaltet und an die Wandung des Träger-Rohrs gedrückt wird und daß die Mantelfläche des Liner-Rohrs im ersten Teilbereich (wieder) konvex gekrümmt ist bzw. das Liner-Rohr 3 eine hohlzylindrische Form angenommen hat. Für PE 100 beispielsweise beträgt die Erweichungstemperatur etwa 128°C und die Fließtemperatur etwa 135°C, wobei der Kristalliten-Schmelzpunkt etwa bei 130°C liegt.

Schließlich wird durch entsprechendes Abkühlen bzw. Abkühlenlassen des Liner-Rohrs 3* der Kunststoff der Wandung des Liner-Rohrs 3* (wieder) in einen elastischen Zustand versetzt, derart, daß ein das Liner-Rohr 3* dauerhaft im Träger-Rohr 2 fixierender Form- und/oder Kraftschluß zwischen Liner-Rohr 3* und Träger-Rohr 2 bzw. zwischen dem damit hergestellten Liner 3 und dem Träger-Rohr 2 gebildet wird; dies ggf. auch unter Zwischenlage einer zwischen Liner 3 und Träger-Rohr 2 eine haftvermittelnde , nämlich Liner 3 und Träger-Rohr 2 durch Adhäsion und Kohäsion verbindende dünnen Zwischenlage 4 (Fig. 1a). Dementsprechend kann das Bilden des Liners 3 im Träger-Rohr 2 beispielsweise zusätzlich auch ein dem Positionieren des Liner-Rohrs 3* im Träger-Rohr 2 vorausgehendes Auftragen eines Haftvermittlers bzw. eines Klebstoffs auf eine Innenfläche der Wandung des Träger-Rohrs 2 und/oder auf die Mantefläche des Liner-Rohrs 3* sowie ein dem Entfalten Liner-Rohres 3* nachfolgendes Aushärtenlassen des (aufgetragenen) Haftvermittlers bzw. Klebstoffs zum Bilden der vorbezeichneten Zwischenlage 4 umfassen. Alternativ oder in Ergänzung kann das Träger-Rohr 2 zwecks Verbesserung der mechanischen Stabilität des Liners 3 und/oder des Form- bzw. Kraftschlusses eine - hier nicht dargestellte - im Lumen des Träger-Rohrs 2 positionierte und mit der Wandung verbundene und/oder darin eingeformte, beispielsweise gitterförmige, Stütz- und Haltevorrichtung (Stützkörper) für den Liner 3 aufweisen, wobei zum Bilden des Liners 3 die Wandung des Liner-Rohres 3* dann auch so verformt wird, daß sie zumindest teilweise gegen die Stütz- und Haltevorrichtung gedrückt wird.

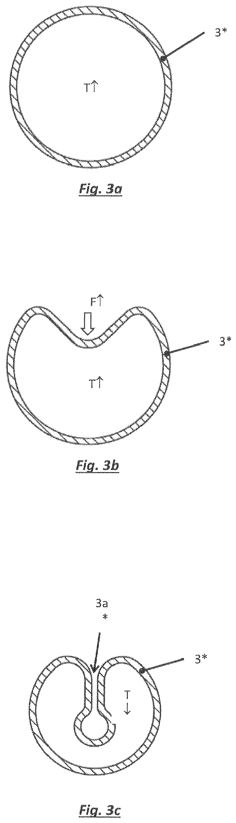

Als Ausgangsmaterial für das Liner-Rohr 3* kann beispielsweise ein aus dem vorbezeichneten thermoplastischen Kunststoff gefertigtes hohlzylindrisches, ggf. auch schlauchartiges (Kunststoff-)Rohr dienen (Fig. 3a). Zwecks Bildung der vorbezeichneten Falte im ersten Teilbereich 3a* des Liner-Rohrs 3* wird nach einer weiteren Ausgestaltung der Erfindung vorab, nämlich vor Bilden des Liners 3 im Träger-Rohr 2, der Kunststoff der Wandung eines zunächst hohlzylindrisches Teilsegment des Liner-Rohr 3*, nämlich ein entsprechendes Teilsegment des schlußendlich als Liner-Rohr 3* dienlichen Kunststoff-Rohrs in einen visko-elastischen Zustand versetzt, beispielsweise nämlich durch Erwärmen aus einem elastischen Zustand in den visko-elastischen Zustand verbracht oder durch Abkühlen bzw. Abkühlenlassen aus einem viskosen Zustand in den visko-elastischen Zustand. Wie in Fig. 3b schematisiert dargestellt, wird der erste Teilbereich der (dann im visko-elastischen Zustand befindlichen) Wandung des Teilsegments des Liner-Rohres 3* daraufhin durch eintragen entsprechender Kräfte (TF) gefaltet, derart, daß, wie auch aus Fig. 3c ersichtlich, die Mantelfläche zumindest des Teilsegments 3a* im ersten Teilbereich hernach konkav gekrümmt ist und daß sowohl das Lumen als auch die Mantelfläche zumindest des Teilsegments jeweils eine von einem Kreiszylinder abweichende, beispielsweise nämlich rinnenförmige, Form bzw. nicht kreisförmige, beispielsweise nämlich c-förmige oder u-förmige, Querschnitte aufweist; dies im besonderen in der Weise, daß - wie bereits erwähnt - eigentlich in geknäulter Lage befindliche Molekülketten im ersten Teilbereich in eine gestreckte Lage überführt werden, wodurch der Memory-Effekt angelegt wird. Anschließend wird das in der vorbezeichneten Wiese umgeformte Teilsegment des Liner-Rohrs wieder bzw. weiter abgekühlt bzw. abkühlen gelassen um den Kunststoff der Wandung zumindest des Teilsegments des Liner-Rohrs in einen elastischen Zustand zu versetzen, derart, daß die wenigstens eine Falte im ersten Teilbereich zumindest des Teilsegments gebildet ist; dies im besonderen derart, daß die Molekülketten in der erzwungenen gestreckten Lage eingefroren sind und diese beibehalten, wodurch dem ersten Teilbereich die zum Aufbringen der für die spätere Umformung des Liner-Rohrs 3* erforderlichen (Rück-)Stellkräfte dienlichen mechanischen Spannungen innewohnen. Die vorbezeichnete Herstellung eines Liner-Rohrs mit einer großen, ggf. auch mehrere 10 m betragenden Länge kann beispielsweise maschinell in einer mittels ausgangs eines Extruders mit Kühlofen angeordneten und den davon gelieferten Rohrstrang aufnehmenden und entsprechend umformenden Falteinheit erfolgen.

Nach einer weiteren Ausgestaltung der Erfindung ist ferner vorgesehen, daß das Liner-Rohr 3* eine Länge aufweist, die größer als eine, beispielsweise mehr als 0,1 m und/oder weniger als 3 m betragende, Länge des Träger-Rohrs 2 ist. Zum Bilden des Liners 3 kann es demnach auch erforderlich sein, das im Träger-Rohr 2 fixierte Liner-Rohr 3* hernach noch zu kürzen, beispielsweise dessen aus dem Träger-Rohr 2 herausragenden Enden, ggf. auch bündig abzutrennen, insb. nämlich abzuschneiden oder abzusägen. Alternativ oder in Ergänzung können die vorbezeichneten überstehenden Enden des (im viskos-elastischen oder viskosen Zustand befindlichen bzw. versetzten) Liner-Rohrs 3* auch mittels eines entsprechenden Preßwerkzeugs aufgeweitet werden, beispielsweise um für den vorbezeichneten Fall, das Anschlußflansche 5, 6 am Träger-Rohr 2 vorgehen sind, so jeweils auch eine entsprechende Flanschdichtung mittels des Liner-Rohrs 3* zu bilden.

Der von den vorbezeichneten Anschlußflanschen 5, 6 und dem Träger-Rohr 2 gebildete Zwischenraum kann - wie nicht zuletzt bei magnetisch-induktiven Durchfluß-Meßgeräten oder bei Ultraschall-Durchfluß-Meßgeräten durchaus üblich - mittels eines umgelegten Bleches, beispielsweise aus einem magnetische Felder abschirmenden Metall, unter Bildung eines Schutzgehäuses verschlossen werden.

## Patentansprüche

1. Verfahren zur Herstellung eines Meßrohrs (1) für ein Durchfluß-Meßgerät, insb. für ein magnetisch-induktives Durchfluß-Meßgerät oder ein Ultraschall-Durchflußmeßgerät oder ein vibronisches Durchfluß-Meßgerät, wobei das Meßrohr (1) ein, insb. zumindest abschnittsweise hohlzylindrisches, Träger-Rohr (2) mit einer Wandung aus einem, insb. nicht-ferromagnetischen, Metall und mit einem davon umschlossenen, insb. zumindest abschnittsweise kreiszylindrischen bzw. kreisförmige Querschnitte aufweisenden, Lumen, einen das Träger-Rohr (3) innen auskleidenden Liner (3) sowie wenigstens ein am Träger-Rohr (3) angebrachtes Sensorelement (31) zum Erfassen wenigstens einer Meßgröße eines im Meßrohr geführten Fluids aufweist, welches Verfahren umfaßt:
- Bereitstellen des Träger-Rohrs (2);
- Bilden des Liners (3) im Lumen des Träger-Rohrs (2);
- sowie Anbringen des wenigstens einen Sensorelements (31) am Träger-Rohr (2);
wobei das Bilden des Liners (3) umfaßt:
- Breitstellen eines Liner-Rohrs (3*) mit einer Wandung aus einem thermoplastischen Kunststoff, insb. einem Polyethylen oder einem Polyvinylchlorid, und einem davon umschlossenen Lumen,
-- wobei das Liner-Rohr (3*) einen Außendurchmesser, der kleiner als ein Innendurchmesser (Kaliber) des Träger-Rohrs (2) ist, aufweist
-- und wobei die Wandung des Liner-Rohrs (3*) in einem ersten Teilbereich (3a*) wenigstens eine, insb. sich entlang einer gedachten Längsachse erstreckende, Falte aufweist, derart,
--- daß sowohl das Lumen als auch eine Mantelfläche des Liner-Rohrs jeweils eine von einem Kreiszylinder abweichende, insb. rinnenförmige, Form bzw. nicht kreisförmige, insb. c-förmige oder u-förmige, Querschnitte aufweist
--- und daß die Mantelfläche des Liner-Rohrs (3*) im ersten Teilbereich (3a*) konkav gekrümmt ist;
- Positionieren des Liner-Rohrs (3*) im Lumen des Träger-Rohrs (2);
- Erwärmen des Liner-Rohrs (3*), insb. mittels in das Lumen des Liner-Rohrs (3*) eingeleitetem Dampf, zum Versetzen des Kunststoffs der Wandung des Liner-Rohrs (3*) in einen visko-elastischen Zustand;
- Verformen der Wandung des Liner-Rohres (3*), derart,
-- daß die Wandung des Liner-Rohres (3*) entfaltet und an die Wandung des Träger-Rohrs (2) gedrückt wird
-- und daß die Mantelfläche des Liner-Rohrs (3*) im ersten Teilbereich (3a*) konvex gekrümmt ist;
- sowie Abkühlen bzw. Abkühlenlassen des Liner-Rohrs (3*) zum Versetzen des Kunststoffs der Wandung des Liner-Rohrs (3*) in einen elastischen Zustand, derart, daß ein das Liner-Rohr (3*) dauerhaft im Träger-Rohr (2) fixierender Form- und/oder Kraftschluß zwischen Liner-Rohr (3*) und Träger-Rohr (2) gebildet wird.

2. Verfahren nach einem der vorherigen Ansprüche, wobei der erste Teilbereich (3a*) des Liner-Rohrs (3*) eingerichtet ist, sich selbsttätig bzw. unter Einwirkung eines Umformdrucks (p) im Lumen umzuformen, wenn der die Wandung des Liner-Rohrs (3*) bildende thermoplastische Kunststoff in den visko-elastischen Zustand versetzt ist, insb. nämlich aufgrund eines Memory-Effekts bei thermoplastischen Kunststoffen.

3. Verfahren nach dem vorherigen Anspruch, wobei das Verformen der Wandung des Liner-Rohres ein selbsttätiges Umformen des ersten Teilbereichs (3a*) des Liner-Rohrs (3*) umfaßt, insb. nämlich aufgrund eines Memory-Effekts bei thermoplastischen Kunststoffen.

4. Verfahren nach einem der vorherigen Ansprüche, weiters umfassend:
- Versetzen des Kunststoffs der Wandung eines zunächst hohlzylindrischen Teilsegments des Liner-Rohrs in einen visko-elastischen Zustand;
- Falten des ersten Teilbereichs der Wandung des Teilsegments des Liner-Rohres, derart,
-- daß die Mantelfläche zumindest des Teilsegments des Liner-Rohrs im ersten Teilbereich hernach konkav gekrümmt ist
-- und daß sowohl das Lumen als auch die Mantelfläche zumindest des Teilsegments des Liner-Rohrs jeweils eine von einem Kreiszylinder abweichende, insb. rinnenförmige, Form bzw. nicht kreisförmige, insb. c-förmige oder u-förmige, Querschnitte aufweist;
- sowie Abkühlen bzw. Abkühlenlassen des Teilsegments (3a*) des Liner-Rohrs (3*) zum Versetzen des Kunststoffs der Wandung zumindest des Teilsegments (3a*) des Liner-Rohrs (3) in einen elastischen Zustand, derart, daß die wenigstens eine Falte im ersten Teilbereich (3a*) zumindest des Teilsegments gebildet ist.

5. Verfahren nach dem vorherigen Anspruch,
- wobei das Versetzen des Kunststoffs der Wandung des Teilsegments in den visko-elastischen Zustand ein Erwärmen des Teilsegments umfaßt; und/oder
- wobei das Versetzen des Kunststoffs der Wandung des Teilsegments in den visko-elastischen Zustand ein Abkühlen bzw. Abkühlenlassen des Teilsegments umfaßt.

6. Verfahren nach einem der vorherigen Ansprüche, wobei sich das Liner-Rohr (3*) während des Positionierens in das Träger-Rohr (2) in einem elastischen Zustand befindet.

7. Verfahren nach einem der vorherigen Ansprüche, wobei der Schritt des Bildens des Liners (3) einen Schritt des Auftragens eines Klebstoffs (4) auf eine Innenfläche der Wandung des Träger-Rohrs (2) und/oder auf die Mantelfläche des Liner-Rohrs (3) umfaßt.

8. Verfahren nach einem der vorherigen Ansprüche, wobei das Liner-Rohr (3*) eine Länge, die größer als eine, insb. mehr als 0,1 m und/oder weniger als 3 m betragende, Länge des Träger-Rohrs (2) ist, aufweist.

9. Verfahren nach dem vorherigen Anspruch, wobei das Bilden des Liners ein Kürzen des im Träger-Rohr (2) fixierten Liner-Rohrs (3*) umfaßt.

10. Verfahren nach einem der vorherigen Ansprüche, wobei an einem ersten Rohrende des Träger-Rohrs (2) ein erster Anschlußflansch (5) und an einem zweiten Rohrende des Träger-Rohrs (2) ein zweiter Anschlußflansch (6) vorgesehen sind, insb. nämlich am jeweiligen Rohrende angeschweißt oder zusammen mit dem Träger-Rohr (2) als integrale Bestandteile eines monolithischen Formteils ausgebildet sind.

11. Verfahren nach einem der vorherigen Ansprüche, weiters umfassend ein Aufweiten wenigstens eines aus dem Träger-Rohr (2) herausragenden Endes, insb. nämlich von aus dem Träger-Rohr herausragenden Enden, des im Träger-Rohrs (2) fixierten Liner-Rohrs, insb. zum Bilden einer Flanschdichtung.

12. Verfahren nach einem der vorherigen Ansprüche, wobei das Träger-Rohr (2) eine in dessen Lumen positionierte und mit dessen Wandung verbundene und/oder darin eingeformte, insb. gitterförmige, Stütz- und Haltevorrichtung für den Liner (3) aufweist, und wobei zum Bilden des Liners (3) die Wandung des Liner-Rohres (3*) so verformt wird, daß sie zumindest teilweise gegen die Stütz- und Haltevorrichtung gedrückt wird.

13. Verfahren nach einem der vorherigen Ansprüche,
- wobei der thermoplastische Kunststoff der Wandung des Liner-Rohrs (3*) ein Polyethylen, insb. ein Hart-Polyethylen bzw. ein PE 80, ein PE 100 oder ein PE 100 RC, ist; und/oder
- wobei das wenigsten eine Sensorelement (31) mittels wenigstens einer, insb. zumindest anteilig auch im Liner positionierte, Elektrode gebildet ist.

## Claims

1. A method for producing a measuring tube (1) for a flowmeter, in particular for a magneto-inductive flowmeter or an ultrasonic flowmeter or a vibronic flowmeter, wherein the measuring tube (1) has an, in particular at least sectionally hollow-cylindrical, support tube (2) with a wall made of an, in particular non-ferromagnetic, metal and with a lumen surrounded thereby, in particular having at least sectionally circularly cylindrical or circular cross sections, a liner (3) lining the inside of the support tube (3) and at least one sensor element (31) attached to the support tube (3) to detect at least one measurement variable of a fluid carried in the measuring tube, which method comprises:
- providing the support tube (2);
- forming the liner (3) in the lumen of the support tube (2);
- and applying the at least one sensor element (31) to the support tube (2);
wherein the forming of the liner (3) comprises:
- providing a liner tube (3*) with a wall made of a thermoplastic, in particular a polyethylene or a polyvinyl chloride, and a lumen surrounded thereby,
-- wherein the liner tube (3*) has an external diameter which is smaller than an internal diameter (caliber) of the support tube (2)
-- and wherein, in a first section (3a*), the wall of the liner tube (3*) has at least one fold extending, in particular, along an imaginary longitudinal axis, such
--- that both the lumen and a lateral surface of the liner tube each have a form deviating from a circular cylinder, in particular a channel-shaped form, and a non-circular cross section, in particular a c-shaped or u-shaped cross section
--- and that the lateral surface of the liner tube (3*) is concavely curved in the first section (3a*);
- positioning the liner tube (3*) in the lumen of the support tube (2);
- heating the liner tube (3*), in particular by means of steam introduced into the lumen of the liner tube (3*), to put the plastic of the wall of the liner tube (3*) into a viscoelastic state;
- deforming the wall of the liner tube (3*) such
-- that the wall of the liner tube (3*) unfolds and is pressed onto the wall of the support tube (2)
-- and that the lateral surface of the liner tube (3*) is convexly curved in the first section (3a*);
- and cooling the liner tube (3*) or allowing the liner tube (3*) to cool in order to put the plastic of the wall of the liner tube (3*) into an elastic state such that a shape and/or force-based locking affixing the liner tube (3*) permanently in the support tube (2) is formed between liner tube (3*) and support tube (2).

2. The method as claimed in one of the preceding claims, wherein the first section (3a*) of the liner tube (3*) is adapted to deform automatically or under the action of a deforming pressure (p) in the lumen when the thermoplastic forming the wall of the liner tube (3*) is put in the viscoelastic state, that is to say in particular as a result of a memory effect in thermoplastics.

3. The method as claimed in the preceding claim, wherein the deforming of the wall of the liner tube comprises an automatic deforming of the first section (3a*) of the liner tube (3*), that is to say in particular as a result of a memory effect in thermoplastics.

4. The method as claimed in one of the preceding claims, further comprising:
- putting the plastic of the wall of an initially hollow-cylindrical partial segment of the liner tube into a viscoelastic state;
- folding the first section of the wall of the partial segment of the liner tube such
-- that the lateral surface at least of the partial segment of the liner tube is concavely curved in the first section hereafter
-- and that both the lumen and the lateral surface at least of the partial segment of the liner tube each have a form deviating from a circular cylinder, in particular a channel-shaped form, or non-circular, in particular c-shaped or u-shaped, cross sections;
- and cooling the partial segment (3a*) of the liner tube (3*) or allowing it to cool in order to put the plastic of the wall at least of the partial segment (3a*) of the liner tube (3) in an elastic state such that the at least one fold is made in the first section (3a*) at least of the partial segment.

5. The method as claimed in the preceding claim,
- wherein putting the plastic of the wall of the partial segment in the viscoelastic state comprises heating the partial segment; and/or
- wherein putting the plastic of the wall of the partial segment in the viscoelastic state comprises cooling the partial segment or allowing it to cool.

6. The method as claimed in one of the preceding claims, wherein the liner tube (3*) is in an elastic state when being positioned in the support tube (2).

7. The method as claimed in one of the preceding claims, wherein the step of forming the liner (3) comprises a step of applying an adhesive (4) to an inner surface of the wall of the support tube (2) and/or to the lateral surface of the liner tube (3).

8. The method as claimed in one of the preceding claims, wherein the liner tube (3*) is of a length which is greater than a length of the support tube (2) which is, in particular, more than 0.1 m and/or less than 3 m.

9. The method as claimed in the preceding claim, wherein forming the liner comprises shortening the liner tube (3*) affixed in the support tube (2).

10. The method as claimed in one of the preceding claims, wherein a first connecting flange (5) is provided at a first tube end of the support tube (2) and a second connecting flange (6) is provided at a second tube end of the support tube (2), that is to say, in particular, welded at the respective tube end or configured together with the support tube (2) as integral components of a monolithic molded part.

11. The method as claimed in one of the preceding claims, further comprising an extending of at least one end protruding from the support tube (2), that is to say, in particular, from ends protruding from the support tube, of the liner tube affixed in the support tube (2), in particular to form a flange seal.

12. The method as claimed in one of the preceding claims, wherein the support tube (2) has an, in particular lattice-shaped, supporting or holding apparatus positioned in its lumen and connected to its wall and/or integrally formed therein for the liner (3), and wherein, to form the liner (3), the wall of the liner tube (3*) is deformed so that it is pressed at least partially against the supporting or holding apparatus.

13. The method as claimed in one of the preceding claims,
- wherein the thermoplastic of the wall of the liner tube (3*) is a polyethylene, in particular a hard polyethylene or a PE 80, a PE 100 or a PE 100 RC; and/or
- wherein the at least one sensor element (31) is formed by means of at least one electrode also positioned, in particular, at least partially in the liner.

## Revendications

1. Procédé destiné à la fabrication d'un tube de mesure (1) pour un débitmètre, notamment pour un débitmètre électromagnétique, un débitmètre à ultrasons ou un débitmètre vibronique, le tube de mesure (1) comprenant un tube support (2), notamment cylindrique creux au moins par tronçons, avec une paroi en un matériau métallique, notamment non ferromagnétique, et avec un canal intérieur entouré par ladite paroi, lequel canal présente notamment au moins partiellement des sections cylindriques circulaires ou circulaires, un liner (3) revêtant l'intérieur du tube support (2), ainsi qu'au moins un élément capteur (31) monté sur le tube support (2), lequel élément capteur est destiné à mesurer au moins une grandeur de mesure d'un fluide guidé dans le tube de mesure, lequel procédé comprend les étapes suivantes :
- Mise à disposition du tube support (2) ;
- Formation du liner (3) dans le canal intérieur du tube support (2) ; ainsi que
- Fixation d'au moins un élément capteur (31) au tube support (2) ;
la formation du liner (3) comprenant les étapes suivantes :
- Mise à disposition d'un tube de liner (3*) avec une paroi en une matière thermoplastique, notamment en polyéthylène ou en chlorure de polyvinyle, et un canal intérieur entouré par ladite paroi,
-- le tube de liner (3*) présentant un diamètre extérieur qui est inférieur à un diamètre intérieur (calibre) du tube support (2), et
-- la paroi du tube de liner (3*) présentant dans une première zone partielle (3a*) au moins un pli, notamment s'étendant le long d'un axe longitudinal imaginaire, de telle sorte
--- qu'aussi bien le canal intérieur qu'une surface d'enveloppe du tube de liner présentent respectivement une forme différente d'un cylindre circulaire, notamment une forme de gouttière, ou des sections transversales non circulaires, notamment en forme de C ou de U, et
--- que la surface d'enveloppe du tube de liner (3*) est incurvée de manière concave dans la première zone partielle (3a*) ;
- Positionnement du tube de liner (3*) dans le canal intérieur du tube support (2) ;
- Échauffement du tube de liner (3*), notamment au moyen de vapeur introduite dans le canal intérieur du tube de liner (3*), pour amener la matière plastique de la paroi du tube de liner (3*) dans un état viscoélastique ;
- Déformation de la paroi du tube de liner (3*) de telle sorte
-- que la paroi du tube de liner (3*) est déployée et pressée contre la paroi du tube support (2) et
-- que la surface d'enveloppe du tube de liner (3*) soit courbée de manière convexe dans la première zone partielle (3a*) ; ainsi que
- Refroidissement actif ou passif du tube de liner (3*) pour amener la matière plastique de la paroi du tube de liner (3*) dans un état élastique, de telle sorte qu'une liaison de forme et/ou de force fixant durablement le tube de liner (3*) dans le tube support (2) est formée entre le tube de liner (3*) et le tube support (2).

2. Procédé selon l'une des revendications précédentes, pour lequel la première zone partielle (3a*) du tube de liner (3*) est conçue pour se déformer automatiquement ou sous l'effet d'une pression de déformation (p) dans le canal intérieur, lorsque la matière thermoplastique formant la paroi du tube de liner (3*) est amenée dans l'état viscoélastique, notamment en raison d'un effet de mémoire dans le cas de matières thermoplastiques.

3. Procédé selon la revendication précédente, pour lequel la déformation de la paroi du tube de liner comprend une déformation automatique de la première zone partielle (3a*) du tube de liner (3*), notamment en raison d'un effet de mémoire dans le cas de matières thermoplastiques.

4. Procédé selon l'une des revendications précédentes, comprenant en outre :
- Amenée de la matière plastique de la paroi d'un segment partiel, qui est dans un premier temps cylindrique creux, du tube de liner dans un état viscoélastique ;
- Pliage de la première zone partielle de la paroi du segment partiel du tube de liner de telle sorte
-- que la surface d'enveloppe au moins du segment partiel du tube de liner soit ensuite incurvée de manière concave dans la première zone partielle et
-- qu'aussi bien le canal intérieur que la surface d'enveloppe au moins du segment partiel du tube de liner présentent respectivement une forme, notamment une forme de gouttière, différente d'un cylindre circulaire, ou des sections transversales non circulaires, notamment en forme de C ou de U ; ainsi que
- Refroidissement actif ou passif du segment partiel (3a*) du tube de liner (3*) pour amener la matière plastique de la paroi au moins du segment partiel (3a*) du tube de liner (3) dans un état élastique, de telle sorte que l'au moins un pli est formé dans la première zone partielle (3a*) au moins du segment partiel.

5. Procédé selon la revendication précédente,
- pour lequel le passage de la matière plastique de la paroi du segment partiel à l'état viscoélastique comprend un échauffement du segment partiel ; et/ou
- pour lequel le passage de la matière plastique de la paroi du segment partiel à l'état viscoélastique comprend un refroidissement actif ou passif du segment partiel.

6. Procédé selon l'une des revendications précédentes, pour lequel le tube de liner (3*) est dans un état élastique pendant le positionnement dans le tube support (2).

7. Procédé selon l'une des revendications précédentes, pour lequel l'étape de formation du liner (3) comprend une étape d'application d'un adhésif (4) sur une surface interne de la paroi du tube support (2) et/ou sur la surface enveloppe du tube de liner (3).

8. Procédé selon l'une des revendications précédentes, pour lequel le tube de liner (3*) présente une longueur supérieure à une longueur du tube support (2), notamment supérieure à 0,1 m et/ou inférieure à 3 m.

9. Procédé selon la revendication précédente, pour lequel la formation du liner comprend un raccourcissement du tube de liner (3*) fixé dans le tube support (2).

10. Procédé selon l'une des revendications précédentes, pour lequel une première bride de raccordement (5) est prévue à une première extrémité du tube support (2) et une deuxième bride de raccordement (6) est prévue à une deuxième extrémité du tube support (2), lesquelles brides sont notamment soudées à l'extrémité de tube respective ou formées avec le tube support (2) comme parties intégrantes d'une pièce moulée monolithique.

11. Procédé selon l'une des revendications précédentes, comprenant en outre un élargissement d'au moins une extrémité dépassant du tube support (2), notamment des extrémités dépassant du tube support, du tube de liner fixé dans le tube support (2), notamment pour former un joint à bride.

12. Procédé selon l'une des revendications précédentes,
pour lequel le tube support (2) présente un dispositif de soutien et de maintien pour le liner (3), lequel dispositif est positionné dans le canal intérieur du tube support, et lequel dispositif est relié à la paroi du tube et/ou formé dans celle-ci, notamment en forme de grille, et
pour lequel, pour former le liner (3), la paroi du tube de liner (3*) est déformée de manière à être pressée au moins partiellement contre le dispositif de soutien et de maintien.

13. Procédé selon l'une des revendications précédentes,
- pour lequel la matière thermoplastique de la paroi du tube de liner (3*) est un polyéthylène, notamment un polyéthylène dur ou un PE 80, un PE 100 ou un PE 100 RC ; et/ou
- l'au moins un élément capteur (31) est formé au moyen d'au moins une électrode, notamment positionnée au moins partiellement dans le liner.
